# EUROPEAN PATENT SPECIFICATION

(11) **EP 0 390 030 B1**
(45) Date of publication and mention of the grant of the patent: **19.07.1995**
(21) Application number: 90105698.6
(22) Date of filing: 26.03.1990
(51) Int. Cl.: B60R 16/00

(54) **Horn switch mechanism of steering wheel**
Lenkrad-Hupenschaltermechanismus
Mécanisme de commutateur de klaxon de volant

(30) Priority: 27.03.1989 JP 34475/89 U; 31.08.1989 JP 102252/89 U
(43) Date of publication of application: 03.10.1990
(73) Proprietor: TOYODA GOSEI CO., LTD., Nishikasugai-gun, Aichi-Pref., 492 (JP)
(72) Inventor: Sakane, Katsunobu, Ichinomiya-shi, Aichi-ken (JP)
(74) Representative: Tiedtke, Harro, Dipl.-Ing.

(56) References cited:
- DE-A- 2 514 518
- FR-A- 1 471 447
- GB-A- 2 061 622
- US-A- 3 670 120
- US-A- 4 594 486

## Description

### BACKGROUND OF THE INVENTION

### Field of the invention

The present invention relates to a horn switch mechanism mounted on a steering wheel of an automobile.

### Description of the Prior Art

A conventional horn switch mechanism of a steering wheel according to the preamble of claim 1 is disclosed as that shown in FIGS. 1 and 2 (refer to US-A-4,594,486).

This conventional horn switch mechanism H0 is composed of a stationary contact plate 2 made of sheet metal and a movable contact plate 3 made of a metal plate spring.

The movable contact plate 3 is of turned H shape (turned by 1/4 revolution) viewing from the upper side, and longitudinal bar poriton of the turned H shape is made a base portion 3a disposed to side of the stationary contact plate 2 and lateral bar portions of the turned H shape are made contact portions 3b extending upward from the base portion 3a.

On the upper surface of the contact portions 3b of the movable contact plate 3 is arranged a depressing plate 4 which is restricted at the separation distance from the stationary contact plate 2 by a restricting means (not shown) and electrically insulated from the stationary contact plate 2, and further a horn pad 1 is disposed above the depressing plate 4.

The base portion 3a of the movable contact plate 3 is fixed to the stationary contact plate 2 through an electrical insulation plate 5 made of plate-shaped synthetic resin having the external configuration similar to that of the base portion 3a, an electrical insulation ring 6 made of circular ring shaped synthetic resin and a terminal 9 with L-like cross-section by a rivet 7 having conductive property.

The stationary contact plate 2 is secured to an energy absorber 10 made of sheel metal fixed to the steering wheel body, such as a boss (not shown) of the steering wheel, and the stationary contact plate 2 is electrically connected to side of a negative terminal of a horn control circuit through the energy absorber 10.

On the other hand, the movable contact plate 3 is electrically connected to a positive terminal of the horn control circuit through a lead wire 8 connected to the terminal 9.

In the horn switch mechanism H0, when the horn pad 1 is depressed, the contact portions 3b of the movable contact plate 3 are depressed through the depressing plate 4 and contacts 3c of the contact portions 3b are brought into contact with contacts 2a of the stationary contact plate 2 and the horn is operated.

In the conventional horn switch mechanism H0, however, the movable contact plate 3 is locked by the rivet 7 to the stationary contact plate 2 through the electrical insulation plate 5, the electrical insulation ring 6 and the terminal 9 and therefore the number of the assembling parts is high.

Also at the locking by the rivet 7, since the four parts, i.e., the movable contact plate 3, the electrical insulation plate 5, the electrical insulation ring 6 and the terminal 9, must be arranged to the stationary contact plate 2, care must be taken so that various parts are not shifted and therefore the assembling work becomes troublesome.

### SUMMARY OF THE INVENTION

It is therefore an object of the present invention to provide a horn switch mechanism of a steering wheel wherein the number of the assembling parts can be decreased and the assembling work becomes easy.

The above-described object is achieved by a horn switch mechanism of a steering wheel according to the features of claim 1.

Further advantageous features of improvements of the present invention are claimed in the corresponding sub claims.

In the horn switch mechanism according to the invention, during the assembling, the two locking legs projecting from both sides of the basic member of the electrically insulation spacer are bent downward, and the edge portion of the base portion of the movable contact plate is locked by the convex members disposed above the respective locking legs and the movable contact plate is held on the basic member, and respective locking legs are locked to the peripheral edge of the locking holes of the stationary contact plate, thereby an electrical insulation ring and a rivet in the prior art is not used but only one electrical insulation spacer is used so that the movable contact plate can be assembled to the stationary contact plate.

In the invention, the lead wire connected to the movable contact plate in the prior art may be connected utilizing, for example, a terminal or a rivet to a tongue of the depressing plate, and the rivet locking work is not that of the four parts, i.e., the movable contact plate, the electrical insulation plate, the electrical insulation ring and the terminal together as in the prior art, but that of the two parts, i.e., the tongue and the terminal which can be performed easily. The conduction to the movable contact plate can be performed without hindrance because the depressing plate is made of sheet metal and assembled at abutting state on the upper surface of the contact portion of the movable contact plate.

Consequently, in the horn switch mechanism of the steering wheel according to the invention, when the movable contact plate is assembled to the stationary contact plate, an electrical insulation ring or a rivet is not used although required in the prior art, but the assembling becomes possible only by using one electrical insulation spacer thereby the number of the assembling parts can be decreased.

Also since two locking legs of the used electrical insulation spacer provided in symmetry lock the edge portion of the base portion of the movable contact plate and hold the movable contact plate on the basic member and are locked respectively to two portions at the peripheral edge of the two locking holes of the stationary plate, the assembling to the stationary contact plate becomes possible without rotating the movable contact plate or the electrical insulation spacer. Further, since the connecting work of the lead wire to the tongue of the depressing plate becomes easy, in cooperation with the decrease of the number of the assemling parts, the assemling work is not troublesome.

### BRIEF DESCRIPTION OF THE DRAWINGS

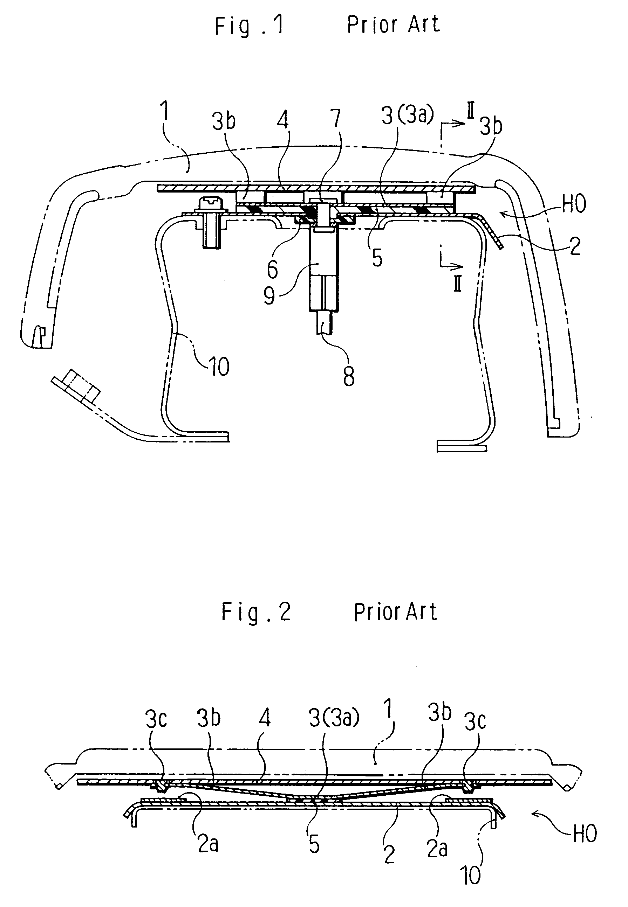

FIG. 1 is a sectional view of a horn switch mechanism in the prior art;
FIG. 2 shows a horn switch mechanism in the prior art and is a sectional view taken on line II-II of FIG. 1;
FIG. 3 shows a first embodiment of the invention and is a sectional view taken on line III-III of FIG. 7;
FIG. 4 is a sectional view illustrating mode that a movable contact plate in the first embodiment is assembled to a stationary contact plate;
FIG. 5 is a perspective view of a movable contact plate, an electrical insulation spacer and a stationary contact plate in the first embodiment;
FIG. 6 is a sectional view taken on line VI-VI of FIG. 7;
FIG. 7 is a plan view illustrating assembling state of a movable contact plate, an electrical insulation spacer and a stationary plate in the first embodiment;
FIG. 8 is a sectional view of a steering wheel illustrating assembling state in the first embodiment and a sectional view taken on line VIII-VIII of FIG. 9;
FIG. 9 is a plan view of a steering wheel illustrating assembling state in the first embodiment;
FIG. 10 is a perspective view of a movable contact plate, an electrical insulation spacer and a stationary contact plate in a second embodiment;
FIG. 11 is a sectional view illustrating mode that a movable contact plate in the second embodiment is assembled to a stationary contact plate;
FIG. 12 is a perspective view of a movable contact plate, an electrical insulation spacer and a stationary contact plate in a third embodiment; and
FIG. 13 is a sectional view illustrating mode that a movable contact plate in the third embodiment is assembled to a stationary contact plate.

### DESCRIPTION OF THE PREFERRED EMBODIMENTS

With reference to the accompanying drawings, preferred embodiments of the present invention are described hereinbelow.

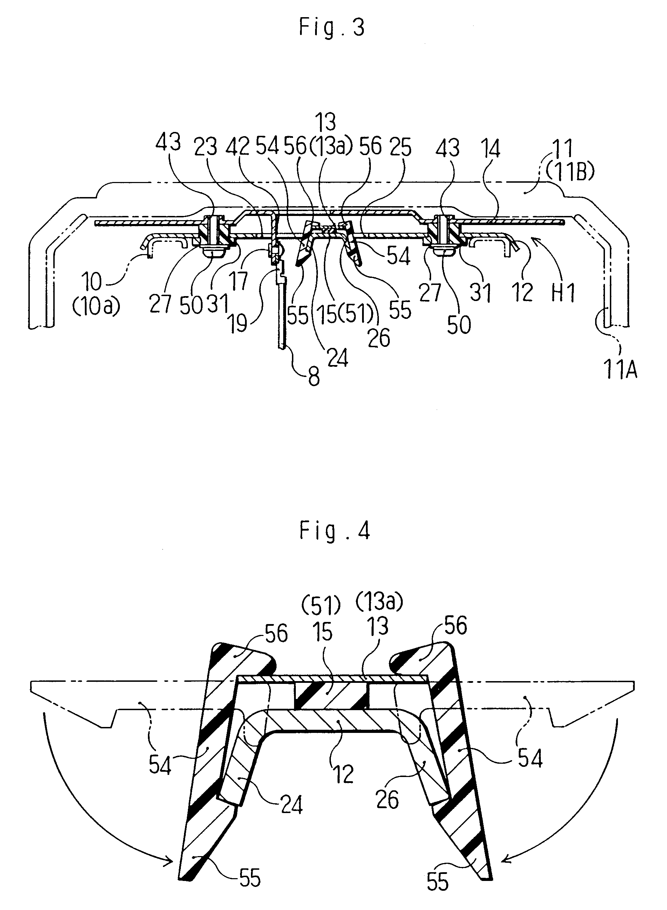

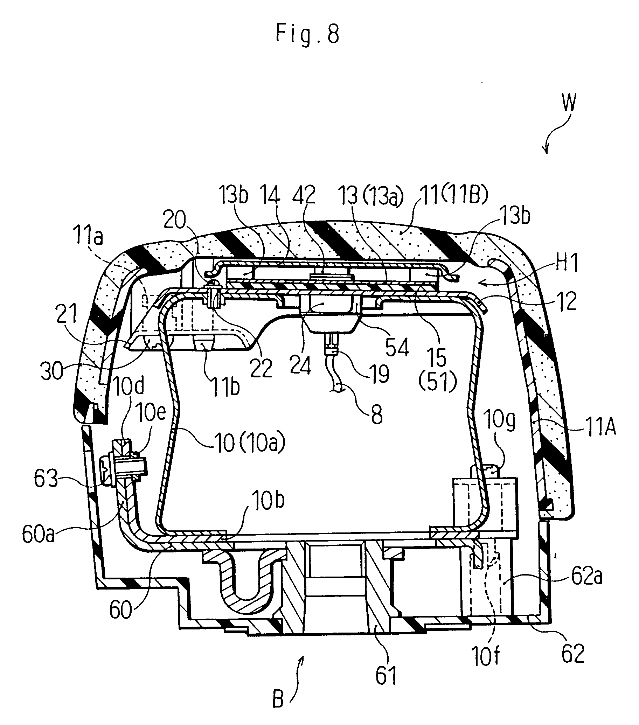

A horn switch mechanism H1 shown in a first embodiment is constituted in arrangement above an energy absorber 10 as shown in FIGS. 3, 6 and 8. The energy absorber 10 is made of sheet metal, and constituted by a deforming member 10a with cross-section of nearly reverse U-like shape and a plate-shaped base portion 10b of rectangular ring shape fixed below the deforming member 10a as shown in FIG. 8, and fixed to side of body of a steering wheel W, such as a boss plate 60 in a boss member B of the steering wheel W. A stationary contact plate 12 is fixed above the deforming member 10a utilizing a screw 20 or welding.

The stationary contact plate 12 is made of sheet metal of nearly rectangular plate shape, and contacts 12a thereof are arranged at four corners of the peripheral edge as shown in FIGS. 3 - 9. Projecting members 21 projecting outward are formed in lowered state by one step on two corners at the rear side of the steering wheel W, and two holes 21a, 21b are formed on each of the projecting members 21. The hole 21a is a threaded hole for inserting a screw 30 threadedly engaged with a nut 11a embedded in a horn pad 11 as hereinafter described, and the hole 21b is a positioning hole for inserting a projection 11b projecting downward from the horn pad 11. On both lateral sides nearly at the center of the stationary contact plate 12 are formed inserting holes 27 for arranging a restricting means 31 as hereinafter described.

On the stationary contact plate 12, two larger and smaller locking holes 23, 25 are formed adjacent to each other at the center portion. These locking holes 23, 25 are formed in arrangement along minor axis direction of a base portion 13a of a movable contact plate 13 when the movable contact plate 13 is arranged above the stationary contact plate 12. Engaging portions 24, 26 bent downward are formed at peripheral edge where these locking holes 23, 25 come close to each other.

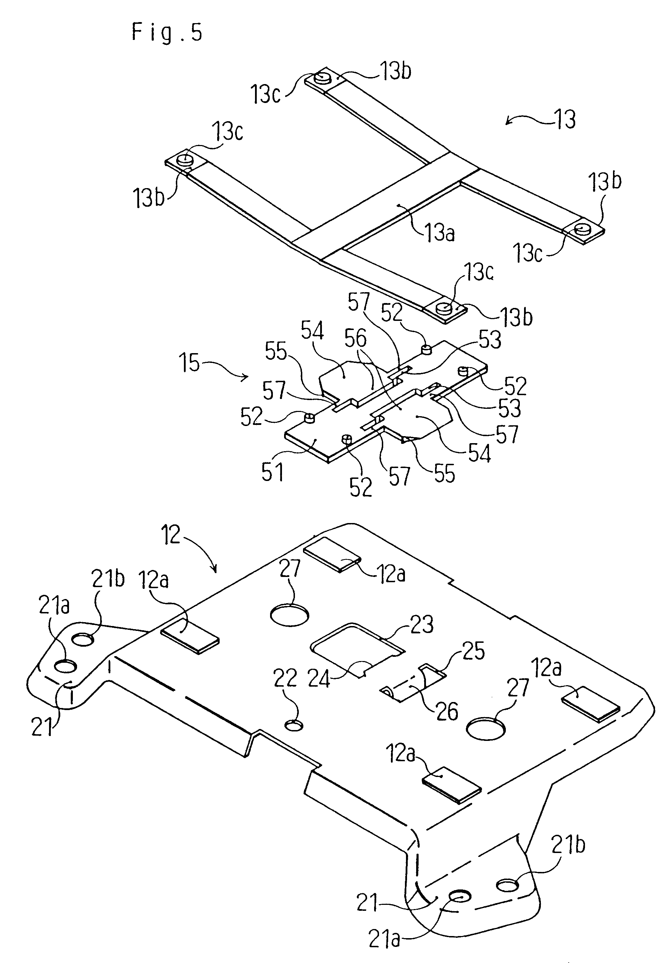

Numeral 22 designates a threaded hole when the stationary contact plate 12 is fixed by a screw 20 to upper side of the deforming member 10a in the energy absorber 10 (refer to FIGS. 5 and 8).

The movable contact plate 13 arranged above the stationary contact plate 12 as shown in FIGS. 3 - 8, is made of a metal plate spring in turned H shape viewing from the upper side in similar manner to the prior art, and longitudinal bar portion of the turned H shape is made a base portion 13a disposed to side of the stationary contact plate 12 and lateral bar portions of the turned H shape are made contact portions 13b extending upward from the base portion 13a, and a contact 13c corresponding to the contact 12a of the stationary contact plate 12 is formed to the end of each contact portion 13b.

An electrical insulation spacer 15 made of synthetic resin having electrical insulation property and spring elasticity, such as polypropylene is arranged between the base portion 13a of the movable contact plate 13 and the stationary contact plate 12.

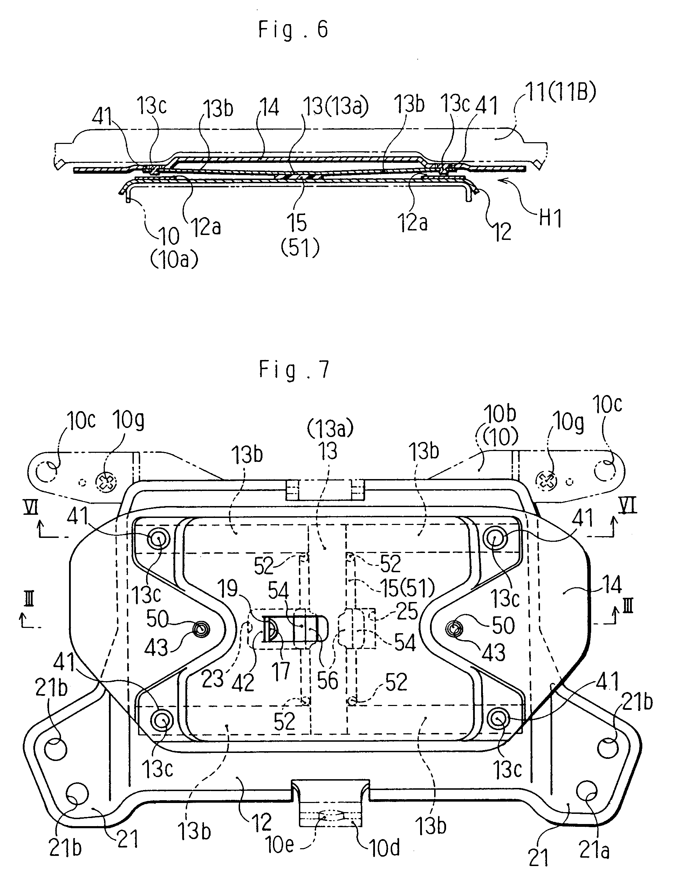

The electrical insulation spacer 15 is provided with a basic member 51 of nearly rectangular plate shape corresponding to the base portion 13a of the movable contact plate 13. The basic member 51 is provided on both sides of the end in the major axis direction in the upper surface with position defining projections 52 spaced by distance corresponding to the width dimension of the base portion 13a (refer to FIGS. 5 and 7). Also the basic member 51 is provided in the vicinity of both sides nearly at the center with slits 53, 53 nearly in parallel to each other along the major axis direction of the base portion 13a disposed on the upper surface. The portion between slits 53, 53 may be removed so as to make a single slit. Further the basic member 51 is provided with locking legs 54, 54 extending outward in symmetry from both sides of the forming portion of each slit 53. Each slit 53 is arranged to form each convex member 56 as hereinafter described and also to form narrow connecting portions 57, 57 connected to the basic member 51 from both sides of the width direction of each locking leg 54. When each locking leg 54 is bent downward, each slit 53 is formed so that each connecting portion 57 is subjected to elastic deformation to be twisted easily hence each locking leg 54 can be bent downward easily.

Each locking leg 54 is provided with hook portion 55 at the end, and also provided with a projecting member 56 at the end of projecting side into each slit 53. The hook portion 55 locks each locking leg 54 to locking portions 24, 26 on peripheral edge of each of the locking holes 23, 25 when each locking leg 54 is bend downward, and the projecting member 56 locks both side edges of the base portion 13a being edge portion of the movable contact plate 13 onto the basic member 51 when each locking leg 54 is bent downward. After each locking leg 54 is bent downward and both side edges of the base portion 13a are locked by each projection 56, since the base portion 13a restricts the spring elasticity of the connecting portion 57 of each locking leg 54 to restore the original state, each locking leg 54 maintains the state and each locking leg 54 in the state is locked in spring elasticity between peripheral edges of the locking holes 23, 25 of the stationary contact plate 12.

On the upper surface near each contact 13c of the contact portion 13b in the movable contact plate 13, as shown in FIGS. 3 and 6 - 9, a depressing plate 14 made of sheet metal in elliptic shape viewing from the upper side is arranged abutting on the circumference of each contact 13c.

The depressing plate 14 is provided with through holes 41 for inserting the contacts 13c of the movable contact plate 13 on four positions of the peripheral edge. Also the depressing plate 14 is provided with threaded holes 43 respectively on both lateral sides nearly at the center thereof, and each threaded hole 43 locks a flanged spacer 31 made of synthetic resin having insulation property and inserted from the inserting hole 27 of the stationary contact plate 12 using a screw 50. The flanged spacer 31 defines the separation distance from the stationary contact plate 12 in the depressing plate 14, and serves as restricting means to insulate the depressing plate 14 from the stationary contact plate 12.

At the center of the depressing plate 14 is formed a tongue 42 with circumference cut away and bent downward. The tongue 42 projects downward through the locking hole 23 of the stationary contact plate 12, and fixes the terminal 19 using the rivet 17. A lead wire 8 electrically connected to the positive polarity side of the horn control circuit is connected to the terminal 19 utilizing clamping, and the conduct ion to movable contact plate 13 is performed through the depressing plate 14 made of sheet metal. On the other hand, the stationary contact plate 12 after assembling to the steering wheel body is electrically connected to the negative polarity side of the horn control circuit through the energy absorber 10, a boss plate 60, a boss 61 and the like.

Also the base portion 13a of the movable contact plate 13 may be provided at the tongue 42, and the tongue 42 projects downward through a hole of the stationary contact plate 12.

A depressing horn pad 11 comprising an insert 11A made of semi-hard synthietic resin having shape holding property and a coating layer 11B made of soft synthetic resin is arranged above the depressing plate 14 as shown in FIGS. 3, 6 and 8. In the depressing horn pad 11, a nut 11a shown in FIG. 8 is embedded to the rear side of the steering wheel W and also to the front side thereof. A screw 30 is threadedly engaged with the nut 11a at the rear side of the steering wheel through the threaded hole 21a of the projection 21 in the stationary contact plate 12, and also threadedly engaged with a nut (not shown) at the front side of the steering wheel through a threaded hole 10c (refer to FIG. 7) formed on the base portion 10b of the energy absorber 10, threrby the depressing horn pad 11 is assembled to the energy absorber 10 fixing the stationary plate 12. The projection 11b projecting from the rear surface of the depressing horn pad 11 is inserted to the positioning hole 21b in the projecting member 21 of the stationary contact plate 12 during the assembling, and facilitates the positioning work.

When the insert 11A is disposed on an upper portion of the depressing horn pad 11, the depressing plate 14 may be removed such that the depressing horn pad 11 depresses directly the movable contact plate 13.

Next, assembling of the horn switch mechanism H1 in the first embodiment will be described. First, the stationary contact plate 12 is previously fixed above the deforming member 10a of the energy absorber 10 utilizing the screw 20 or welding, and the terminal 19 with the lead wire 8 connected to the tongue 42 of the depressing plate 14 is locked by the rivet 17.

As shown in FIG. 4, the base portion 13a of the movable contact plate 13 is arranged on the basic member 51 of the electrical insulation spacer 15 and the locking legs 54, 54 are bent downward, and both side edges of the base portion 13a being the edge portion of the movable contact plate 13 on the basic member 51 are locked by the convex members 56, 56 arranged at the upper position of each locking leg 54 and further the locking legs 54, 54 are locked to the locking members 24, 26 on the peripheral edge of the locking holes 23, 25 of the stationary contact plate 12.

The contacts 13c of the movable contact plate 13 are disposed in the through hole 41 and the flanged spacer 31 inserted from the lower side is interposed in the inserting hole 27 of the stationary contact plate 12, and the screw 50 is threadedly engaged with the threaded holes 43, 43 and the depressing plate 14 is fixed above the stationary contact plate 12.

Subsequently the screw 30 are threadedly engaged with the nuts 11a embedded at the front and rear sides of the steering wheel W in the depressing horn pad 11 through the threaded hole 21a of the projecting member 21 of the stationary contact plate 21 or the threaded hole 10c of the base portion 10b in the energy absorber 10, and the depressing horn pad 11 is fixed to the energy absorber 10.

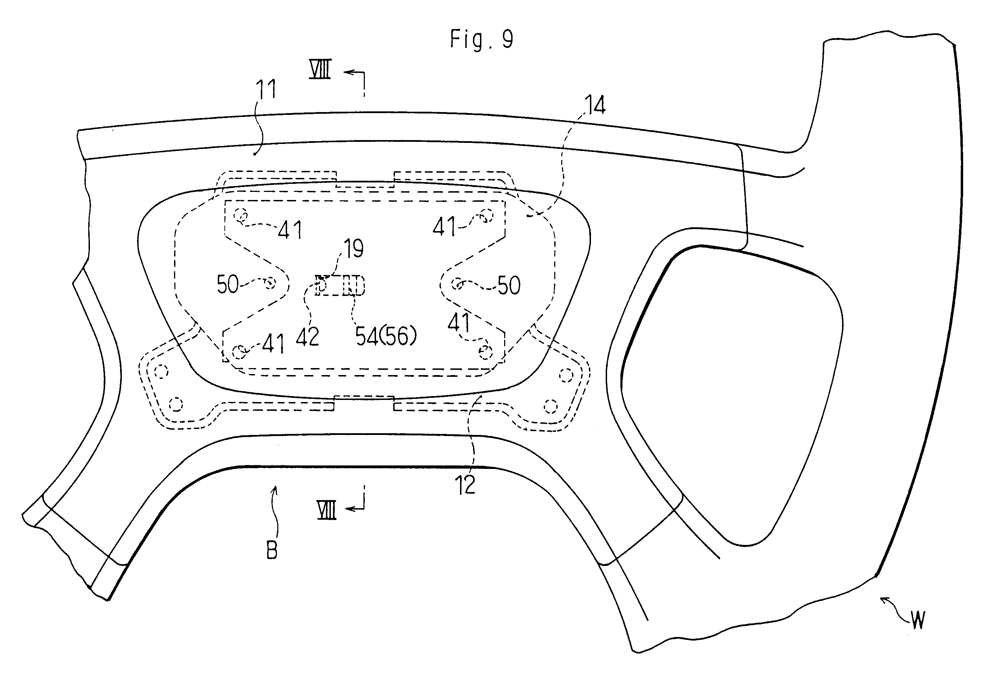

And then the energy absorber 10 together with the horn switch mechanism H1 is fixed to the steering wheel body where the boss plate 60 or the like in the steering wheel W is arranged (refer to FIG. 9). In the fixing mode, as shown in FIG. 8, the tongue 10d with the nut 10e formed at the base portion 10b of the energy absorber 10 and the locking leg 10f (refer to FIG. 8) locked by the screw 10g (refer to FIG. 7) to the base portion 10b are utilized, and the tongue 10d is fixed to the plate 60a extending upward from the boss plate 60 utilizing the screw 63 and the locking leg 10f is locked to the locking cylinder 62a of the lower cover 62.

The steering wheel W with the horn switch mechanism H1 and the energy absorber 10 assembled thereto is installed to the vehicle, and then the upper side of the depressing horn pad 11 is depressed, thereby the contacts 13c of the contact portion 13b of the movable contact plate 13 are brought into contact with the contacts 12a of the stationary contact plate 12 through the depressing plate 14 so as to operate the horn.

Consequently, in the horn switch mechanism H1 of the first embodiment, during the assembling, an electrical insulation ring 6 in the prior art becomes unnecessary and by only utilizing one electrical insulation spacer 15, the movable contact plate 13 can be assembled to the stationary contact plate 12 and therefore the number of the assembling parts can be decreased.

Further in the first embodiment, the two locking legs 54, 54 are installed in symmetry on both sides of the electrical insulation spacer 15, and lock both side edges of the base portion 13a of the movable contact 13 by respective convex members 56 and hold the movable contact plate 13 so as to hold it on the basic member 51, thereby the movable contact plate 13 can be locked without rotating to the electrical insulation spacer 15. The electrical insulation spacer 15 locks the two locking legs 54, 54 projecting outward in symmetry from both sides of the basic member 51 respectively to the locking members 24, 26 at the circumferential edge of the locking holes 23, 25 and fixed to the stationary contact plate 12, thereby the electrical insulation spacer 15 itself is also assembled without rotating to the stationary contact plate 12.

The lead wire 8 connected to the movable contact plate 3 in the prior art may be connected to the depressing plate 14, and the connection is performed only in that the terminal 19 with the lead wire 8 connected thereto is locked by the rivet 17 to the tongue 42 of the depressing plate 14. Consequently, in comparison to the prior art where the four parts, i.e., the movable contact plate 3, the electrical insulation plate 5, the electrical insulation ring 6 and the terminal 9, together are locked by the rivet 7, since only the two parts, i.e., the tongue 42 and the terminal 19, are locked by the rivet 17, the connecting work can be performed easily.

In the first embodiment, since the projections 52 for positioning both sides of the base portion 13a of the movable contact plate 13 are formed on the upper surface of the basic member 51, the positioning during arranging the base portion 13a onto the basic member 51 becomes easy. In this connection, the projections 52 need not be installed at the four positions but, for example, the two projections 52 may be installed along the major axis direction of the basic member 51 nearly at the center of the upper surface of the basic member 51 and fitting holes corresponding to these projections may be provided on the base portion 13a of the movable contact plate 13.

Also in the first embodiment, since the rivet 17 to be used during connecting the terminal 19 to the tongue 42 of the depressing plate 14 is different from the rivet 7 for connecting the four parts in the prior art and may be used for connecting the two parts only, a small rivet in comparison to the rivet 7 in the prior art may be used and the resources saving is realized.

In the first embodiment, in the connection between the depressing plate 14 and the lead wire 8, the terminal 19 is locked by the rivet 17 to the tongue 42. However, the tongue 42 may be clamped and the lead wire 8 may be directly connected. Further, a fitting portion which can be connected by inserting the terminal 19 may be formed below the tongue 42.

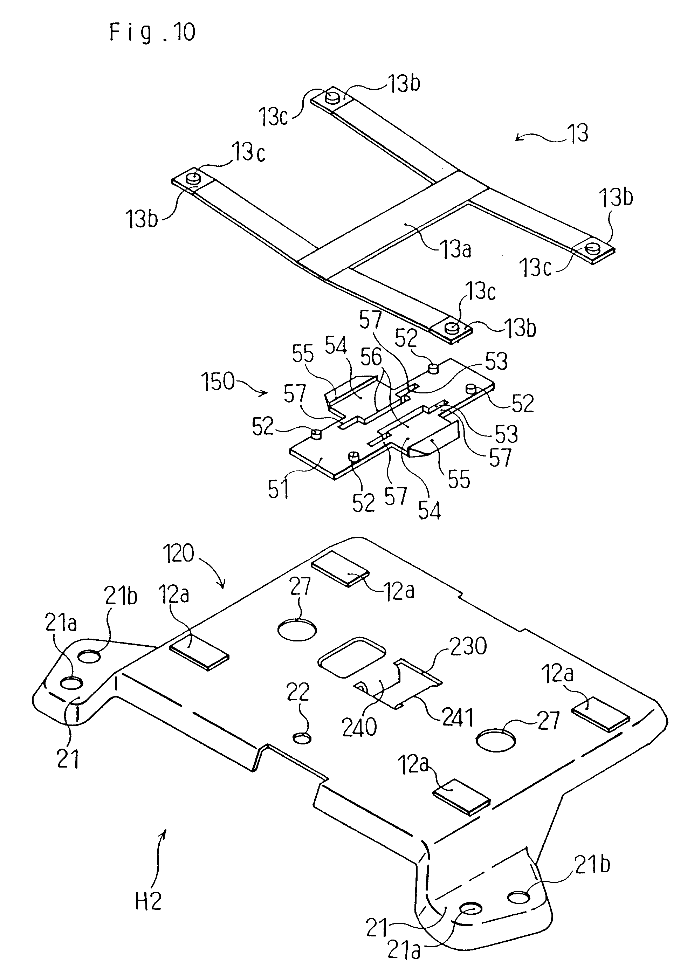

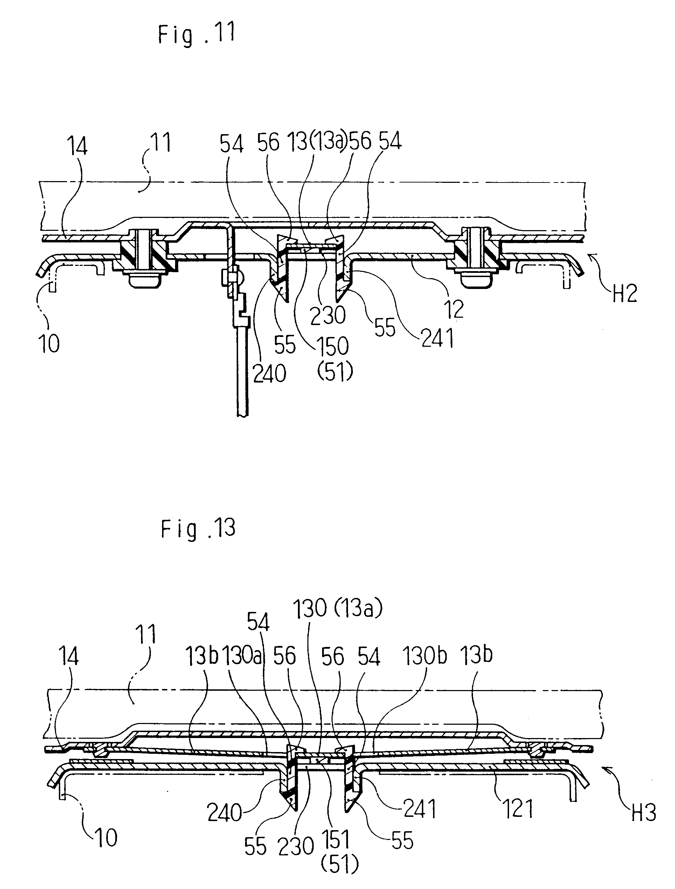

In the first embodiment, the locking legs 54, 54 of the electrical insulation splacer 15 are locked to the peripheral edge of the two locking holes 23, 25 of the stationary contact plate respectively. However, as in a horn switch mechanism H2 of a second embodiment shown in FIGS. 10 and 11, if an electrical insulation spacer 150 is formed so that each hook portion 55 of the locking legs 54, 54 is projected outward when each hook portion 55 is bent downward, a locking hole 230 of a stationary contact plate 120 may be made one. Numerals 240, 241 designate locking members formed on a peripheral edge of the locking hole 230 for locking the hook portions 55, 55.

In the first and second embodiments, although the movable contact plate 13 is of the turned H shape viewing from the upper side, if the base portion 13a and the contact portion 13b extending from the base portion 13a are provided, the movable contact plate of dash-like shape viewing from the upper side may be used.

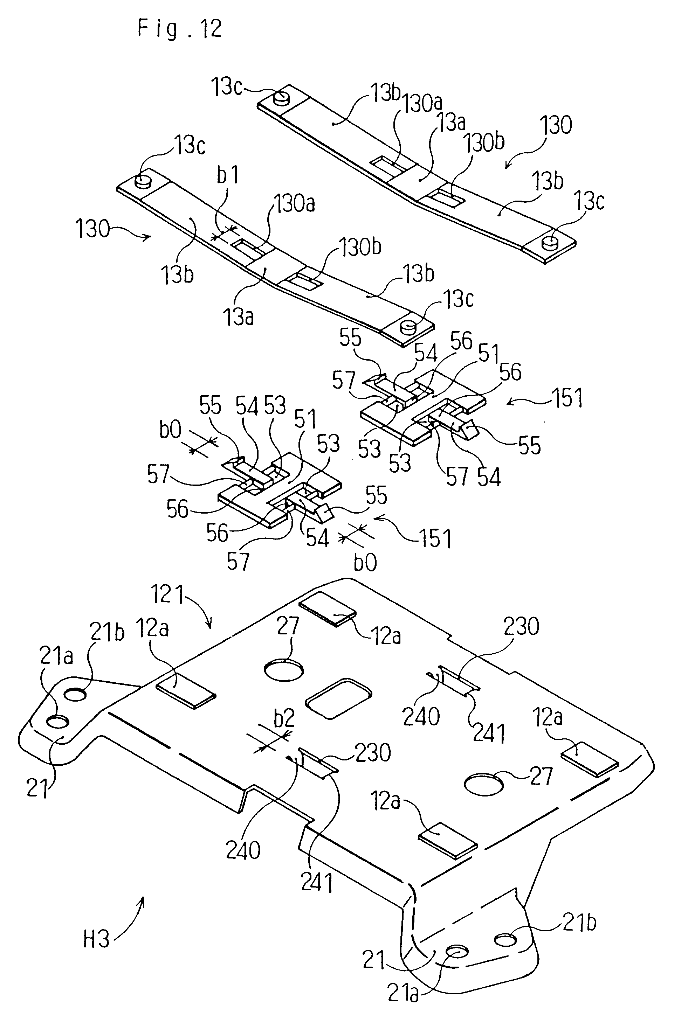

Further in the first and second embodiments, in the edge portion of the movable contact plate 13, both side edges in the minor axis direction in the base portion 13a are locked by the convex member 56 of each of the locking legs 54, 54 in the electrical insulation spacer 15, 150. However, as in a horn switch mechanism H3 of a third embodiment shown in FIGS. 12 and 13, a peripheral edge of locking holes 130a, 130b formed in a movable contact plate 130 may be made an edge portion and the convex member 56 of each of the locking legs 54, 54 in an electrical insulation spacer 150 may be locked.

The movable contact plate 130 is made of a plate spring similarly to the first and second embodiments, and through holes are formed nearly at the base of the contact portion 13b extending upward from the base portion 13a so as to reduce the spring resiliency of each contact portion 13b, and these through holes are utilized as the locking holes 130a, 130b.

In the third embodiment, in addition to the effects similar to the first and second embodiments, each of the locking legs 54, 54 of the electrical insulation spacer 151 has width b0 nearly coincident with width b1 of the locking holes 130a, 130b of the movable contact plate 130 and width b2 of the locking hole 230 of the stationary contact plate 121, and is inserted to each of the locking holes 130a, 130b, 230. Consequently, after the movable contact plate 130 is assembled to the stationary contact plate 121 using the electrical insulation spacer 151, the movable contact plate 130 can be prevented from shifting with respect to the stationary contact plate 121 not only in the major axis direction but also in the minor axis direction.

In the third embodiment, although the movable contact plate 130 is of dash-like shape viewing from the upper side, of course, if a predetermined hole is provided in the base portion 13a, the movable contact plate 13 of the turned H shape viewing from the upper side as used in the first and second embodiments may be used.

A horn switch mechanism of a steering wheel comprises a stationary contact plate having a locking hole, a movable contact plate having a base portion fixed to the stationary contact plate and contact portions extending upward from the base portion, a depressing plate disposed above the movable contact plate, and a horn pad disposed above the depressing plate. The depressing plate is connected to a lead wire electrically connected to the horn control circuit. An electrical insulation spacer made of synthetic resin having spring elasticity is disposed between the stationary contact plate and the movable contact plate. The electircal insulation spacer comprises a basic member, a slit provided on the basic member, and two locking legs projecting respectively from both sides of the basic member and each locking leg having a convex member. Each locking leg is locked to a peripheral edge of the locking holes of the stationary contact plate. Each convex member locking the base portion of the movable contact plate.

## Claims

1. A horn switch mechanism of a steering wheel, comprising:
a stationary contact plate (12; 120; 121);
a movable contact plate (13; 130) having a base portion (13a) fixed to said stationary contact plate (12; 120; 121) and having contact portions (13b) extending away from said stationary contact plate (12; 120; 121); and
a depressing horn pad (11) disposed on a side of said movable contact plate (13; 130) distant from said stationary contact plate (12; 120; 121) which is electrically insulated from said movable contact plate (13; 130) by an electrical insulation spacer (15; 150; 151) disposed therebetween, characterized in that
said electrical insulation spacer (15; 150; 151) comprises a basic member (51) having a slit (53) provided on both sides thereof and two projecting locking legs (54) projecting outwardly from both sides, respectively, bent towards said stationary contact plate (12; 120; 121) and locked with a peripheral edge of at least one locking hole (23; 230) positioned in said stationary contact plate (12; 120; 121), said locking legs (54) having a convex member locking an edge portion of said base portion (13a) of said movable contact plate (13; 130) at an upper position of said locking leg (54) in its bent position.

2. A horn switch mechanism of a steering wheel as set forth in claim 1, wherein said stationary contact plate (12) is provided with two locking holes (23, 25) and each of said two locking legs (54) of said electrical insulation spacer (15) is locked to a peripheral edge of each locking hole (23, 25).

3. A horn switch mechanism of a steering wheel as set forth in claim 1, wherein both edges of said base portion (13a) of said movable contact plate (13; 130), extending in the minor axis direction are locked by said convex member of said each locking leg (54) of said insulation spacer (15; 150; 151).

4. A horn switch mechanism of a steering wheel as set forth in claim 1, wherein projections (52) for positioning both edges of said base portion (13a) of said movable contact plate (13) are formed on said basic member (51) of said electrical insulation spacer (15; 150).

5. A horn switch mechanism of a steering wheel as set forth in claim 1, wherein said movable contact plate (130) is provided with two locking holes (130a, 130b) adjacent to said base portion (13a), and a convex member of each of said locking legs (54) of said electrical insulation spacer (151) is locked to said peripheral edge of said two locking holes (130a, 103b), respectively.

6. A horn switch mechanism of a steering wheel as set forth in claim 5, wherein width dimension of each locking hole (130a, 130b) formed in said movable contact plate (13) is substantially the same as that of said convex member of each locking leg (54) of said electrical insulation spacer (151) and width dimension of said locking hole (230) of said stationary contact plate (121) is substantially the same as that of the portion for locking to said locking hole (130a, 130b) of said stationary contact plate (121) in each locking leg (54) of said electrical insulation spacer (151).

7. A horn switch mechanism of a steering wheel as set forth in claim 1, wherein said movable contact plate (13) is of substantially turned H-shape and a longitudinal bar portion of said turned H-shape is forming said base portion (13a) and lateral bar portions of said turned H-shape are forming said contact portions (13b).

8. A horn switch mechanism of a steering wheel as set forth in claim 1, wherein said movable contact plate (130) is of substantially dash-like shape and the center portion of the dash-like shape is forming said base portion (13a) and both sides of said base portion (13a) are forming the contact portions (13b).

9. A horn switch mechanism of a steering wheel as set forth in claim 1, further comprising a depressing plate (14) having a tongue (42) and disposed on said movable contact plate (13; 130).

10. A horn switch mechanism of a steering wheel as set forth in claim 9, wherein a lead wire (8) is connected to said tongue (42).

11. A horn switch mechanism of a steering wheel as set forth in claim 1, wherein said two slits (53) provided in said insulation spacer (15; 150; 151) are substantially parallel.

12. A horn switch mechanism of a steering wheel as set forth in claim 1, wherein said basic member (51) of said electrical insulation spacer (15; 150; 151) and said two locking legs (55) thereof are connected by connecting portions (57) each being subjected to elastic deformation.

## Patentansprüche

1. Hupenschaltermechanismus eines Lenkrades mit folgenden Bauteilen:
einer feststehenden Kontaktplatte (12; 120; 121);
einer beweglichen Kontaktplatte (13; 130) mit einem an der feststehenden Kontaktplatte (12; 120; 121) befestigten Grundabschnitt (13a) und mit Kontaktabschnitten (13b), die sich von der feststehenden Kontaktplatte (12; 120; 121) weg erstrecken; und
einem niederzudrückenden Hupenpolster (11), das auf einer Seite der beweglichen Kontaktplatte (13; 130) entfernt von der feststehenden Kontaktplatte (12; 120; 121) angeordnet ist, die durch einen dazwischen angeordneten elektrischen Isolierabstandshalter (15; 150; 151) von der beweglichen Kontaktplatte (13; 130) elektrisch isoliert ist, dadurch gekennzeichnet, daß
der elektrische Isolierabstandshalter (15, 150; 151) ein Grundelement (51) aufweist mit einem Schlitz (53), der auf beiden Seiten davon vorgesehen ist, und mit zwei vorstehenden Verriegelungsschenkeln (54), die von beiden Seiten jeweils nach außen vorstehen sowie gegen die feststehende Kontaktplatte (12; 120; 121) gebogen sind und mit einer Umfangskante zumindest eines Verriegelungsloches (23; 230) verriegelt sind, wobei die Verriegelungsschenkel (54) ein konvexes Element haben, das einen Kantenabschnitt des Grundabschnitts (13a) der beweglichen Kontaktplatte (13; 130) an einer oberen Lage des Verriegelungsschenkels (54) in seiner umgebogenen Lage verriegeln.

2. Hupenschaltermechanismus eines Lenkrades nach Anspruch 1, dadurch gekennzeichnet, daß die feststehende Kontaktplatte (12) mit zwei Verriegelungslöchern (23, 25) versehen ist und jeder der beiden Verriegelungsschenkel (54) des elektrischen Isolierabstandshalters (15) mit einer Umfangskante jedes Verriegelungslochs (23, 25) verriegelt ist.

3. Hupenschaltermechanismus eines Lenkrades nach Anspruch 1, dadurch gekennzeichnet, daß beide sich in Richtung der kleineren Achse erstreckenden Kanten des Grundabschnitts (13a) der beweglichen Kontaktplatte (13; 130) durch das konvexe Element jedes Verriegelungsschenkels (54) des elektrischen Isolierabstandshalters (15; 150; 151) verriegelt sind.

4. Hupenschaltermechanismus eines Lenkrades nach Anspruch 1, dadurch gekennzeichnet, daß Vorsprünge (52) zum Positionieren beider Kanten des Grundabschnitts (13a) der beweglichen Kontaktplatte (13) auf dem Grundelement (51) des elektrischen Isolierabstandshalters (15; 150) ausgebildet sind.

5. Hupenschaltermechanismus eines Lenkrades nach Anspruch 1, dadurch gekennzeichnet, daß die bewegliche Kontaktplatte (130) mit zwei Verriegelungslöchern (130a, 130b) versehen ist, die benachbart zum Grundabschnitt (13a) liegen und ein konvexes Element jedes Verriegelungsschenkels (54) des elektrischen Isolierabstandshalters (151) jeweils mit der Umfangskante der beiden Verriegelungslöcher (130a, 130b) verriegelt ist.

6. Hupenschaltermechanismus eines Lenkrades nach Anspruch 5, dadurch gekennzeichnet, daß die Breitenabmessung jedes in der beweglichen Kontaktplatte (13) ausgebildeten Verriegelungsloches (130a, 130b) im wesentlichen gleich der des konvexen Elementes jedes Verriegelungsschenkels (54) des elektrischen Isolierabstandshalters (151) ist und die Breitenabmessung des Verriegelungsloches (230) der feststehenden Kontaktplatte (121) im wesentlichen gleich der des Abschnittes zum Verriegeln mit dem Verriegelungsloch (130a, 130b) der feststehenden Kontaktplatte (121) bei jedem Verriegelungsschenkel (54) des elektrischen Isolierabstandshalters (151) ist.

7. Hupenschaltermechanismus eines Lenkrades nach Anspruch 1, dadurch gekennzeichnet, daß die bewegliche Kontaktplatte (13) im wesentlichen in gedrehter H-Form ist und der Längsschenkelabschnitt der gedrehten H-Form den Grundabschnitt (13a) bildet und die Seitenschenkelabschnitte der gedrehten H-Form die Kontaktabschnitte (13b) bilden.

8. Hupenschaltermechanismus eines Lenkrades nach Anspruch 1, dadurch gekennzeichnet, daß die bewegliche Kontaktplatte (43) im wesentlichen in von oben gesehener Streifenform ist und der Mittenabschnitt der Streifenform als den Grundabschnitt (13a) bildet, und beide Seiten des Grundabschnitts als die Kontaktabschnitte (13b) bilden.

9. Hupenschaltermechanismus eines Lenkrades nach Anspruch 1, gekennzeichnet durch eine Niederdrückplatte (14) mit einer Zunge (42) und auf der beweglichen Kontaktplatte (13; 130) angeordnet.

10. Hupenschaltermechanismus eines Lenkrades nach Anspruch 9, dadurch gekennzeichnet, daß eine Kabelleitung (8) mit der Zunge (42) verbunden ist.

11. Hupenschaltermechanismus eines Lenkrades nach Anspruch 1, dadurch gekennzeichnet, daß die beiden in dem elektrischen Isolierabstandshalter (15; 150; 151) vorgesehenen Schlitze (53) im wesentlichen parallel sind.

12. Hupenschaltermechanismus eines Lenkrades nach Anspruch 1, dadurch gekennzeichnet, daß das Grundelement (51) des elektrischen Isolierabstandshalters (15; 150; 151) und deren beide Verriegelungsschenkel (55) durch Verbindungsabschnitte verbunden sind und jeweils elastischer Verformung unterliegen.

## Revendications

1. Mécanisme de contacteur d'avertisseur d'un volant de direction, comprenant:
une plaque de contact fixe (12;120;121);
une plaque de contact mobile (13;130) ayant une position de base (13a) fixée sur cette plaque de contact fixe (12;120;121) et ayant des portions de contact (13b) partant de cette plaque de contact fixe (12; 120; 121); et
un bouton de commande d'avertisseur à enfoncement (11) disposé sur un côté de cette plaque de contact mobile (13; 130) distante de la plaque de contact fixe (12; 120; 121), laquelle est électriquement isolée de la plaque de contact mobile (13; 130) par une entretoise d'isolation électrique (15; 150; 151) disposée entre elles, caractérisé en ce que cette entretoise d'isolation électrique (15; 150; 151) comprend un élément de base (51) ayant une fente (53) sur chacun de ses deux côtés et deux pattes de verrouillage (54) se projetant vers l'extérieur respectivement de ces deux côtés, coudées vers la plaque de contact fixe (12; 120; 121) et verrouillées sur un bord périphérique d'au moins un trou de verrouillage (23; 230) situé dans la plaque de contact fixe (12; 120; 121), ces pattes de verrouillage (54) ayant un élément convexe verrouillant une portion de bord de cette portion de base (13a) de la plaque de contact mobile (13; 130) au niveau d'une position supérieure de la patte de verrouillage (54) dans sa position coudée.

2. Mécanisme de contacteur d'avertisseur d'un volant de direction selon la revendication 1, dans lequel la plaque de contact fixe (12) comprend deux trous de verrouillage (23, 25) et dans lequel chacune des deux pattes de verrouillage (54) de l'entretoise d'isolation électrique (15) est verrouillée sur un bord périphérique de chaque trou de verrouillage (23, 25).

3. Mécanisme de contacteur d'avertisseur d'un volant de direction selon la revendication 1, dans lequel les deux bords de la portion de base (13a) de la plaque de contact mobile (13; 130) s'étendant dans la direction du petit axe, sont verrouillés par l'élément convexe de chaque patte de verrouillage (54) de cette entretoise d'isolation (15; 150; 151).

4. Mécanisme de contacteur d'avertisseur d'un volant de direction selon la revendication 1, dans lequel des tétons (52) destinés à positionner les deux bords de la portion de base (13a) de la plaque de contact mobile (13) sont formés sur l'élément de base (51) de cette entretoise d'isolation électrique (15; 150).

5. Mécanisme de contacteur d'avertisseur d'un volant de direction selon la revendication 1, dans lequel la plaque de contact mobile (130) présente deux trous de verrouillage (130a, 130b) adjacents à la portion de base (13a) et dans lequel un élément convexe de chaque patte de verrouillage (54) de cette entretoise d'isolation électrique (151) est verrouillé sur le bord périphérique des deux trous de verrouillage (130a, 130b), respectivement.

6. Mécanisme de contacteur d'avertisseur d'un volant de direction selon la revendication 5, dans lequel la dimension en largeur de chaque trou de verrouillage (130a, 130b) formé dans la plaque de contact mobile (13) est pratiquement la même que celle de l'élément convexe de chaque patte de verrouillage (54) de cette entretoise d'isolation électrique (151) et dans lequel la dimension en largeur du trou de verrouillage (230) de la plaque de contact fixe (121) est pratiquement la même que celle de la portion de verrouillage sur le trou de verrouillage (130a, 130b) de la plaque de contact fixe (121) dans chaque patte de verrouillage (54) de cette entretoise d'isolation électrique (151).

7. Mécanisme de contacteur d'avertisseur d'un volant de direction selon la revendication 1, dans lequel la plaque de contact mobile (13) a pratiquement la forme d'un H tourné et dans lequel une portion de barre longitudinale de cette forme de H tourné forme la portion de base (13a) et les portions de barre latérales de cette forme de H tourné forment les portions de contact (13b).

8. Mécanisme de contacteur d'avertisseur d'un volant de direction selon la revendication 1, dans lequel la plaque de contact mobile (130) a pratiquement la forme d'une lame et la portion centrale de la forme de lame forme la portion de base (13a) et les deux côtés de cette portion de base (13a) forment les portions de contact (13b).

9. Mécanisme de contacteur d'avertisseur d'un volant de direction selon la revendication 1, comprenant en outre une plaque d'enfoncement (14) ayant une languette (42) et disposée sur la plaque de contact mobile (13; 130).

10. Mécanisme de contacteur d'avertisseur d'un volant de direction selon la revendication 9, dans lequel un fil conducteur (8) est raccordé à cette languette (42).

11. Mécanisme de contacteur d'avertisseur d'un volant de direction selon la revendication 1, dans lequel les deux fentes (53) ménagées dans l'entretoise d'isolation (15; 150; 151) sont pratiquement parallèles.

12. Mécanisme de contacteur d'avertisseur d'un volant de direction selon la revendication 1, dans lequel l'élément de base (51) de l'entretoise d'isolation électrique (15; 150; 151) et les deux pattes de verrouillage (55) de cet élément de base, sont reliés par des portions de liaison (57) soumises chacune à une déformation élastique
